# EUROPEAN PATENT SPECIFICATION

(11) **EP 4 639 075 B1**
(45) Date of publication and mention of the grant of the patent: **25.11.2026**
(21) Application number: 23833438.7
(22) Date of filing: 18.12.2023
(51) Int. Cl.: G01B 11/06, B60C 11/24, G01B 11/02, G01B 11/22

(54) **METHOD FOR MEASURING TREAD WEAR OF A TIRE USING A CODE**
VERFAHREN ZUR MESSUNG DES LAUFFLÄCHENVERSCHLEISSES EINES REIFENS UNTER VERWENDUNG EINES CODES
PROCÉDÉ DE MESURE DE L'USURE DE BANDE DE ROULEMENT D'UN PNEU À L'AIDE D'UN CODE

(30) Priority: 19.12.2022 FR 2213798
(43) Date of publication of application: 29.10.2025
(73) Proprietor: COMPAGNIE GENERALE DES ETABLISSEMENTS MICHELIN, 63000 Clermont-Ferrand (FR)
(72) Inventor: ALBOTA, Adrian, 63040 Clermont-Ferrand Cedex (FR)
(74) Representative: Casalonga
(86) International application number: PCT/EP2023/086280
(87) International publication number: WO 2024/133028

(56) References cited:
- WO-A1-2021/247036
- US-A1- 2019 226 833

## Description

### FIELD OF THE INVENTION

The subject matter of the present invention relates to a method of measuring tread wear of a tire through the use of a code to determine whether the tire is in such a worn state that it should be replaced. More particularly, the present application involves a tread wear measurement that utilizes a barcode or a two-dimensional code located on the tire and a visual data capture device to capture visual data to ascertain the amount of remaining tread on the tire.

### BACKGROUND OF THE INVENTION

Tread on tires becomes worn through normal use, and tires should be retreaded or replaced once the tread reaches a replacement size. Tire level wear may be checked by end users, maintenance technicians, or fleet checkers by visual mechanisms. For example, the tread may be provided with a tread wear indicator within the grooves of the tread, or in the case of smooth tires on the sidewalls. The tread wear indicator may indicate replacement of the tire or tread once the tread outer surface wears down to the level of the tread wear indicator. Additionally or alternatively, a measurement gauge can be used to check the tread depth, the tread thickness, or the entire external outer diameter of the tire to determine the amount of tread remaining. Both of these types of measuring the tread are time consuming and are prone to reading and data recordation errors.

Automatic means of measuring tread wear are known, and these techniques may involve the use of laser beams, 3D camera scanners, or magnetic field sensors. However, such automatic techniques are often complex, and require expensive equipment, installation and maintenance. Still further, dedicated sites for these measurements must be provided for, and the average user or maintenance personnel may not have access to such sites.

Another way of measuring tire wear is through the use of sensors located inside of the tire or on the wheel onto which the tire is mounted. However, such tread wear measurement systems are vehicle and tire specific, complex, expensive, and require extensive connectivity systems and data processing. Although ways of measuring tire wear are known, there remains room for variation and improvement within the art.

US2019/226833A1 discloses a method for assessing tyre tread depth and/or tyre condition by taking and analysing a camera image or images of a tyre using portable instrumentation.

WO2021/247036A1 discloses a method for tracking tire tread wear using a tire monitoring sensor, which involves determining the current circumference of tire based on rotational time period, and determining a tread wear value based on the current circumference.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 is a schematic view of the side of a tire and a cell phone that captures an image of the tire.
Fig. 2 is a schematic view of a section of a tire from the front and an imaging device for a method that measures to a radially outward point of a barcode of the tire.
Fig. 3 is a schematic view of a section of a tire from the front and an imaging device for a method that measures to a position line on a code of the tire.
Fig. 4 is a schematic view of the side of a tire and a cell phone that captures an image of the tire in which the code is a two-dimensional code.
Fig. 5 is a schematic view of a section of a tire from the front and an imaging device for a method that measures the wear of the tire using a code that is a two-dimensional code.
Fig. 6 is a front view of a barcode.
Fig. 7 is a front view of a barcode that has a position line.
Fig. 8 is a front view of a barcode that is a Code 128.
Fig. 9 is a front view of a barcode that is an interleaved 2 of 5 barcode.
Fig. 10 is a front view of a barcode that is a Code 93.
Fig. 11 is a front view of a barcode that is a two-track pharmacode.
Fig. 12 is a front view of a barcode that uses flattermarken marks.
Fig. 13 is a front view of a barcode that is circular in shape.
Fig. 14 is a front view of a two-dimensional code that is a data matrix.
Fig. 15 is a front view of a two-dimensional code that is a PDF417.
Fig. 16 is a front view of a two-dimensional code that is an Aztec code.
Fig. 17 is a front view of a two-dimensional code that is a MaxiCode.
Fig. 18 is a front view of a two-dimensional code that is a QR code.
Fig. 19 is a front view of a cell phone that displays a replacement message.
Fig. 20 is a perspective view of an agricultural tire that has a code on its sidewall.
Fig. 21 is a perspective view of a tractor that has track systems with some of the wheels of the track system having a code thereon for wear measurement.

The use of identical or similar reference numerals in different figures denotes identical or similar features.

### DETAILED DESCRIPTION OF THE INVENTION

Reference will now be made in detail to embodiments of the invention, one or more examples of which are illustrated in the drawings. Each example is provided by way of explanation of the invention and is not meant as a limitation of the invention. For example, features illustrated or described as part of one embodiment can be used with another embodiment to yield still a third embodiment.

A method of measuring wear on a tire 10 is provided that involves capturing visual data from the tire 10 through the use of an imaging device that may be a cell phone 40, lidar scanner, or other imaging device in accordance with various embodiments. A code 12 is located on the tire 10, and the visual data captured includes a reading of the code 12 and use of a length 16 of the code 12 to in turn ascertain data on the worn tread surface 14 of the tire 10. The wear of the tire 10 can then be calculated by using this data that was visually captured. A message 54 to the user of the method can be sent to indicate to him or her the amount of tread remaining on the tire 10, or to indicate that it is time to replace the tire 10 if the tread has reached it's end of life.

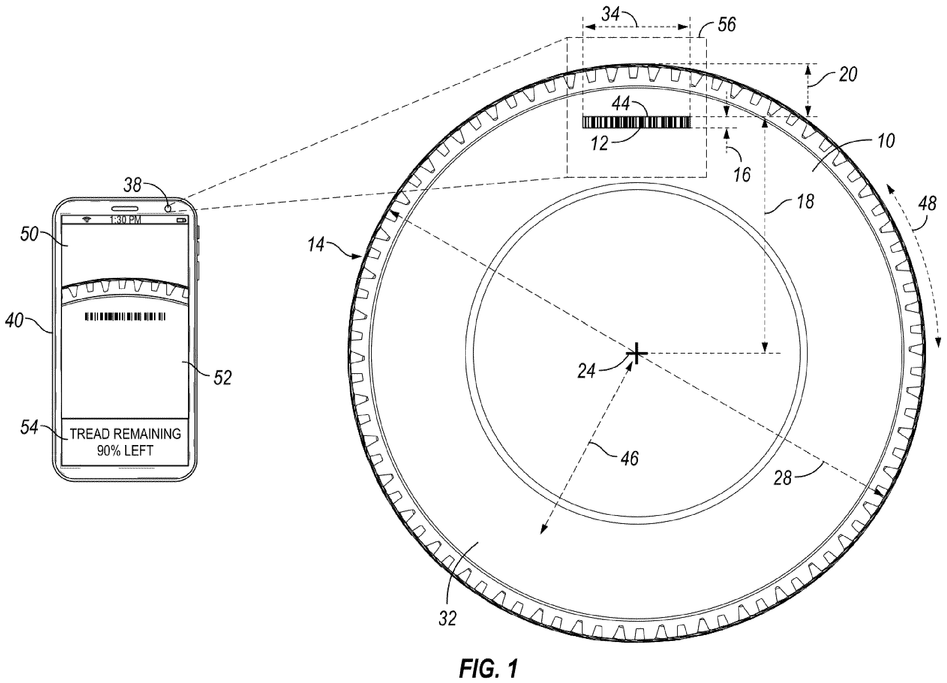

Fig. 1 is a schematic view of a tire 10 that is in side view and is being imaged by an image capture device that is in this case a cell phone 40. The tire 10 illustrated in Fig. 1 is a heavy truck tire. The tire 10 has a radial direction 46 that extends outward from a central axis 24. The circumferential direction 48 extends around the central axis 24 and the tread of the tire 10 extends completely around the central axis 24 in the circumferential direction 48. The outer surface of the tire 10 in the radial direction 46 has a new tread outer surface, but through wear of the tire 10 this new tread outer surface wears down to the illustrated worn tread surface 14 that in turn has a smaller worn tire outer diameter 28 than does the outer diameter of the tire 10 when in the new state. The tread is located on and is generally outward in the radial direction 46 from a sidewall 32 of the tire 10. A code 12, that in this case is a barcode 12, is located on the sidewall 32. In the embodiment shown, the code 12 is spaced in the radial direction 46 from the tread such that no portion of the tread engages the code 12.

A user of the system will use the cell phone 40 to take an image 52 of the tire 10 with the cell phone camera 38. The view 56 should be a portion of the tire 10 that includes both the tread and the code 12. The entire tread of the tire 10 does not need to be captured in the view 56, but at least some of it should be captured along with the code 12. Preferably, both the tread and the code 12 are both captured in the same view 56, but other methods are possible in which multiple images 52 are captured such that the tread is in one image 52 with the code 12 in a different image 52. The barcode 12 is oriented on the tire 10 such that it extends longer in the circumferential direction 48 than it extends in the radial direction 46. The code 12 has a circumferential length 34 that is longer than a length 16 that extends in the radial direction 46. When described as the circumferential length 34 it is to be understood that this length is not completely in the circumferential direction 48 but is instead generally tangential to a circumference of the tire 10. The circumferential length 34 is longer in the circumferential direction 48 than the radial direction 46, and is a straight length as shown in Fig. 1 as the barcode 12 has a rectangular shape. The length 16 could be described as the height of the code 12, and is longer in the radial direction 46 than in the circumferential direction 48. The lengths 34, 16 simply represent the width and height of the code 12. A single view 56 may capture the entire circumferential length 34 and length 16 of the code 12 along with a side view of some of the tread of the tire 10 and along with some of the sidewall 32 of the tire 10 that is between the tread and the code 12. The central axis 24 of the tire 10 is not captured in the view 56 in Fig. 1.

The code 12 can be provided on the tire 10 in any number of manners. The code 12 could be molded into the sidewall 32 during the curing process. The code 12 could also be applied to the tire 10 by being a sticker that is placed onto the tire 10 either before or after the curing process. Laser printing, or any other type of printing, could also be used to apply the code 12 to the tire 10. The code 12 may provide information about the tire 10 type, may provide specific dimensional information about the tire 10, or may provide both.

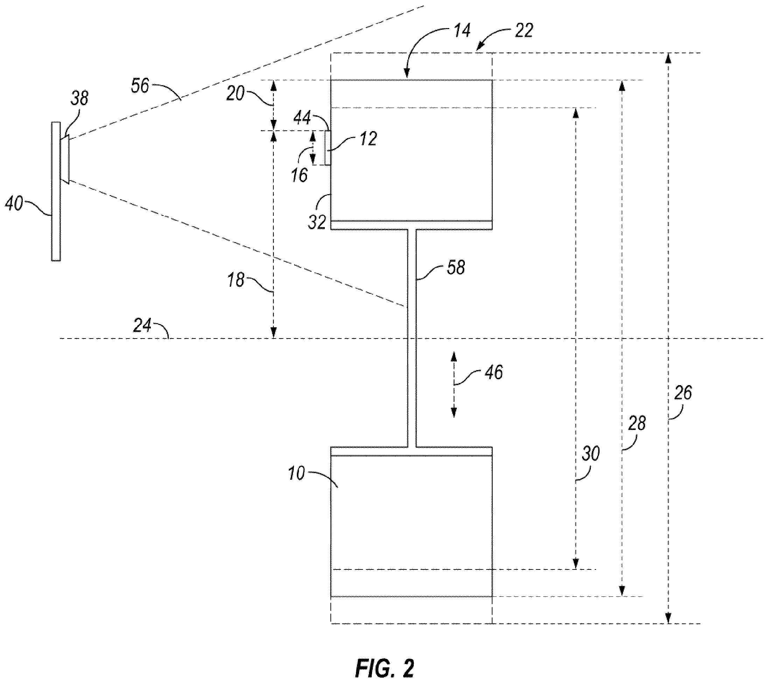

The image 52 that is generated on the display 50 of the cell phone 40 may be that as captured in the view 56 directed onto the tire 10. Also displayed is a message 54 that indicates the amount of tread left on the tire 10 as output by analysis of the tread and known values. Turning to Fig. 2, an exemplary embodiment of the method of evaluating the tire 10 can be described. The tire 10 is mounted onto a wheel 58 and in this instance is a solid tire 10 as opposed to a pneumatic tire 10. The central axis 24 extends through both the wheel 58 and tire 10. When new, the tire 10 is at 100% remaining tread life and no wear has occurred. The new tread surface 22 is illustrated in Fig. 2, and the new tire outer diameter 26 is also noted and is the diameter of the tire 10 as measured using the new tread surface 22. Upon wear of the tread, the tread will shrink in size in the radial direction 46 so that the worn tread surface 14 establishes a worn tire outer diameter 28 which is less than the new tire outer diameter 26. A replacement tire outer diameter 30 is also shown in Fig. 2 which is smaller than both the worn tire outer diameter 28 and the new tire outer diameter 26. The replacement tire outer diameter 30 is the diameter of the tire 10 at which time the tread is considered worn to such a degree that replacement should be made. The tire 10 could be thrown away and replaced, or the tire 10 in some instances could be retreaded once the tire 10 reaches a diameter of the replacement tire outer diameter 30.

The image capturing device in Fig. 2 is a cell phone 40 that has a cell phone camera 38, and the user may capture the image of a view 56 of a portion of the tire 10. The view 56 need not be the entire tire 10, but could be in some embodiments. In the Fig. 2 embodiment the view 56 includes the side of the tire 10 and captures the code 12, that again in this embodiment is a barcode 12, and a portion of the sidewall 32 and the side of the worn tread surface 14. The cell phone 40 should be held a sufficient distance from the tire 10 to capture the relevant objects, and should be held at a parallel orientation to the sidewall 32 so that the cell phone camera 38 has a straight on as possible view of the tire 10. The method for measuring could provide additional information to the user and visual guidance on the cell phone 40 about the positioning of the cell phone 40 such as a frame that helps centering the barcode 12 in the image 52. Software in the cell phone 40 or on a server could provide this additional information or centering frame. The view 56 does not include the central axis 24 and the middle of the wheel 58 is not captured, but the middle/central axis 24 could be within the view 56 in other embodiments.

The cell phone 40 includes the cell phone camera 38 and an internal operating system that allows an application to run on it to process information the cell phone camera 38 captures and access a database with dimensional information on it to determine the wear of the tire 10. The database may be external to the cell phone 40 or included on the cell phone 40. Although described as being a cell phone 40, any other type of device or devices can be used to capture the image 52, perform a database look up, and process the data to obtain the wear rate.

The image 52 captures the code 12 and a processor reads the code 12 and can identify the type of tire 10 through this code 12. A database can be consulted so that the processor or user can know the dimensions of the new tire outer diameter 26 and replacement tire outer diameter 30. Additionally, since the particular tire 10 can be identified via the code 12, the system may also know what the length 16 of the code 12 is and may know exactly where on the tire 12 the code 12 was positioned which is identified in Fig. 2 as the length 18 of the position of the code 12. The code 12 has a known position on the tire 10 and a known size. The length 16 is measured in the radial direction 46 and is thus the length of the barcode 12 as measured in the radial direction 46. The length 18 is likewise measured in the radial direction 46 and is the distance from the central axis 24 to a most radially outward position 44 of the code 12. The lengths 16, 18 may thus be known distances that are established at the time the tire 10 is manufactured and the barcode 12 is put onto the tire 10 or formed with the tire 10. The lengths 16, 18 may be obtained via lookup in a database by the user or by a processor.

The most radially outward position 44 of the code 12 is a point of the code 12 that is farthest from the central axis 24 in the radial direction 46. This position 44 can be the very end of one of the bar portions of the barcode 12, or could be a point located on the end of a label of the barcode 12 and not necessarily a point on one of the bars of the barcode 12. The most radially outward position 44 can be used to ascertain the location of the code 12 on the tire 10 in some embodiments, but need not be used in other embodiments.

The lengths 26, 30, 16 and 18 may thus all be known lengths that are established before any wear on the tire 10 occurs. These lengths 26, 30, 16, 18 can be stored in a database on the cell phone 40 or remotely such as on the cloud or other server for access by the processor or user. The processing can be an application running on the cell phone 40 and may utilize a database with known information also on the cell phone 40 or on the cloud. The system may know the lengths 26, 30, 16, 18 before the visual data is captured by the cell phone 40. The image 52 that is captured in the view 56 will capture the entire length 16 of the code 12, and will capture the tread to the extent that the side of the tread at the worn tread surface 14 will be captured in the image 52. The length 20 in Fig. 2 represents the length in the radial direction 46 from the code 12 to the worn tread surface 14.

The processor will know the length 16 via database look up and can then compare this known length 16 to the same radial length 16 taken in the image 52 to calibrate itself. With this calibration, the length 20 in the image 52 can be ascertained. The calibration to determine the length 20 may be achieved by knowing the number of pixels present in the known radial length 16 and comparing this to the measured amount of pixels in the image 52 of the radial length 16, and then comparing this information to the measured length 20 in the image 52. In other embodiments, color differences between what is known and what is measured can be used to calibrate the method to determine the length 20. The processor uses the measured distance in the radial direction 46 between the worn tread surface 14 and the most radially outward position 44 of the code 12, and the measured length 16 along with the known length 16 from the database to obtain the correct length 20 in the radial direction 46 from the most radially outward position 44 of the code 12 to the worn tread surface 14. The visual data thus includes the entire lengths 16 and 20, along with the bars of the barcode 12 sufficient to read the barcode 12. The entire barcode 12 can be captured in the image 52 when executing the method.

With this information, the system may then determine the worn tire outer diameter 28. The method may add together length 18 of the position of the code 12 to the length 20 of worn tread surface 14 to the barcode 12 to arrive at the radius of the worn tire 10. Multiplication of this number by two will arrive at the worn tire outer diameter 28.

With the measured information, the method may calculate the tire wear rate. A processor could make this tire wear rate calculation. The processor as described in the present application may be in the cell phone 40, in the cloud, a remote server, or in any combination of these components. The tire wear rate equals ((new tire outer diameter 26 - worn tire outer diameter 28) / (new tire outer diameter 26 - replacement tire outer diameter 30)). Additional data analysis may be executed by the processor in that if the previously calculated worn tire outer diameter 28 is greater than the replacement tire outer diameter 30 then a tire okay message 54 is displayed. In such instances if the tire wear rate was calculated by the processor, this tire wear rate may be additionally displayed with the okay message 54. If the worn tire outer diameter 28 is less than the replacement tire outer diameter 30, the processor may make this determination and then issue a warning message 54 to the user to tell him or her that the tire 10 needs to be changed. A negative wear rate could be calculated to let the user know how far below replacement the tire 10 tread has reached. Measured data combined with date and location information provided by the device and software may be processed under the form of tire 10 tread wear speed in time per specific location of wear.

Although the method has been described with use of the new tire outer diameter 26, worn tire outer diameter 28, and replacement tire outer diameter 30 to make the aforementioned calculations to determine the tire 10 wear rate, replacement state, non-replacement state, and other data analysis results, the diameters 26, 28, 30 need not be used in other embodiments. Radiuses could be used instead of the diameters 26, 28, 30 so that the new tire 10 radius, worn tire 10 radius, and replacement tire 10 radius could be obtained from the database and/or measured and determined in the image 52.

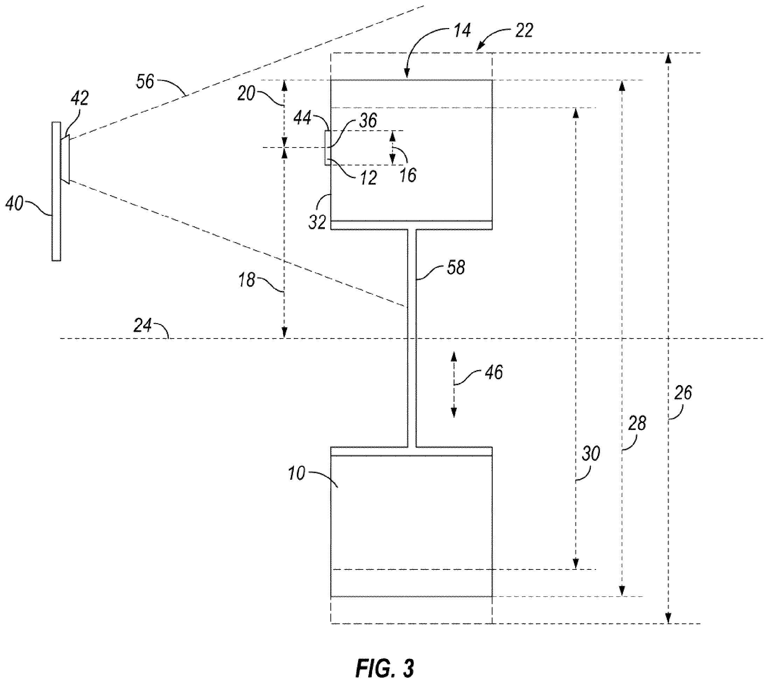

Another embodiment of the method is shown with reference to Fig. 3. The same methods as previously described with respect to the Fig. 2 embodiment can be executed with the Fig. 3 embodiment with the following exceptions. The code 12 is again a barcode 12 in Fig. 3 has a length 16 that extends in the radial direction 46, and has a most radially outward position 44. However, the barcode 12 in Fig. 3 has a position line 36 that is located at a particular position in the radial direction 46. The length 18 of the position of the barcode 12 is not measured from the central axis 24 to the most radially outward position 44 of the barcode 12, but instead the length 18 of the position of the barcode 12 is measured from the central axis 24 to the position line 36. Length 18 is thus not measured from the central axis 24 to the most radially outward position 44, but is instead measured from the central axis 24 to the position line 36, which can be at any radial position of the barcode 12. The length 20 from the worn tread surface 14 to the barcode 12 is measured in the radial direction 46 that is from the position line 36 to the worn tread surface 14. It is thus the case that unlike the Fig. 2 embodiment, the length 20 is not from the most radially outward position 44 to the worn tread surface 14, but is instead from the position line 36 to the worn tread surface 14.

Instead of a cell phone camera 38, the cell phone 40 in Fig. 3 uses a lidar scan 42 to obtain the image 52 from the view 56. In other embodiments, a laser scan can be used to obtain the image 52. It is thus the case that the image 52 obtained from the tire 10 and code 12 can be obtained through any number of different visual data capture devices that could be employed in various embodiments of the present method.

When the method obtains the visual data, the data about the tire 10 that the method then ascertains can be data from a look-up table and/or data observed in the view 56. The data about the tire 10 may be the length 18 of the position of the code, the length 16 either observed and/or taken from a look-up table, the new tire outer diameter 26, a replacement tire outer diameter 30, position of the central axis 24, the circumferential length 34, tire 10 type, information about the two-dimensional code 12, and other data. The aforementioned values could be diameters as stated or may be radii as the method can use either in different parts to ascertain the wear.

The method of Fig. 3 would again have as a known item the new tire outer diameter 26, the replacement tire outer diameter 30, the length 16, and the length 18. The visual data obtained from the view 56 will capture the code 12 so that the aforementioned known elements can be looked up from a database, and so that the measured length 16 can be known and compared to the length 16 from the database for calibration purposes. The length 20 can be measured as previously discussed, only this length 20 will be from the worn tread surface 14 to the position line 36. The worn tire outer diameter 28 may be calculated as previously discussed by adding the lengths 18 and 20 together and then multiplying by two. The other data analysis steps such as the calculation of wear rate percentage, messages 54 displaying the tire 10 tread is acceptable, messages 54 displaying the tire 10 tread needs replaced, and the negative wear rate percentage may be calculated and displayed as previously discussed.

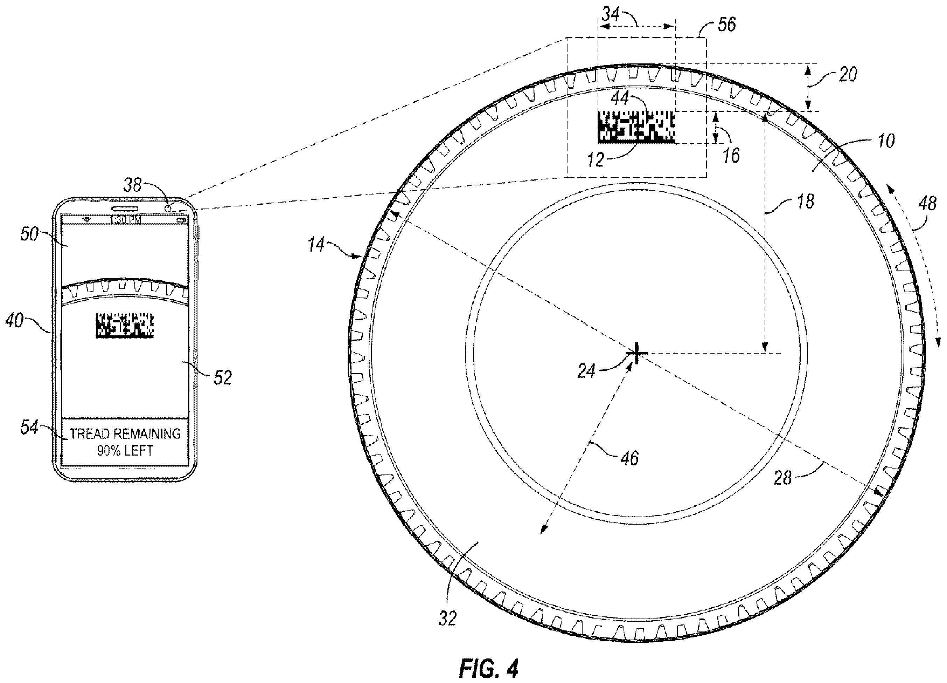

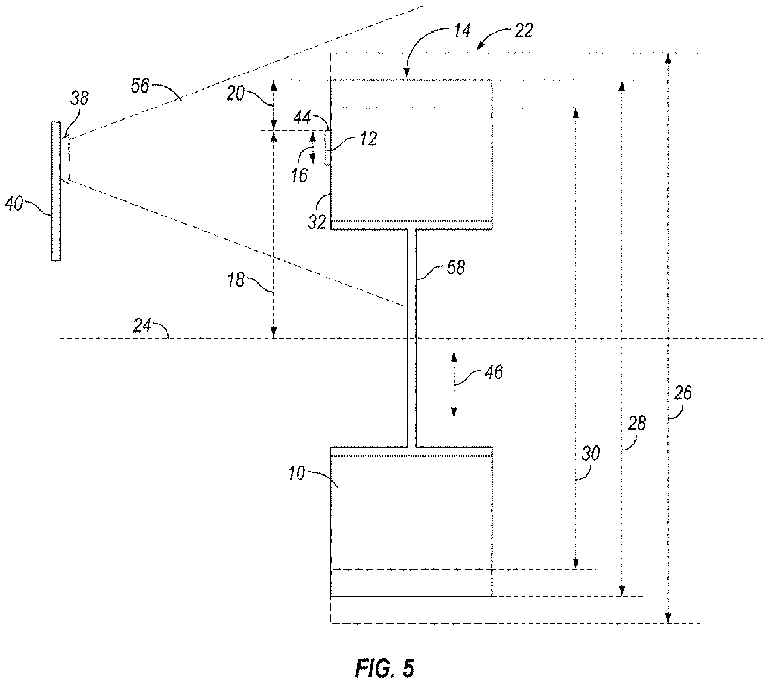

Figs. 4 and 5 show embodiments of the method similar to those previously disclosed with respect to Figs. 1 and 2, but in which the code 12 is not a barcode 12 but is instead a two-dimensional code 12. The most radially outward position 44 of the two-dimensional code 12 is a point of the two-dimensional code 12 farthest from the central axis 24 in the radial direction 46. This position 44 can be the very end of one of the data points of the two-dimensional code 12, or could be a point located on the end of a label of the two-dimensional code 12 and not a data point on the two-dimensional code 12. The same steps described in the Figs. 1 and 2 embodiments with a barcode 12 can be employed in the Figs. 3 and 4 embodiments with the barcode 12 substituted with the two-dimensional code 12 in order to determine the wear of the tread of the tire 10, and it is thus not necessary to repeat all of these steps in order to describe how the method may function when a two-dimensional code 12 is used as the code 12 instead of a barcode 12 as the code 12.

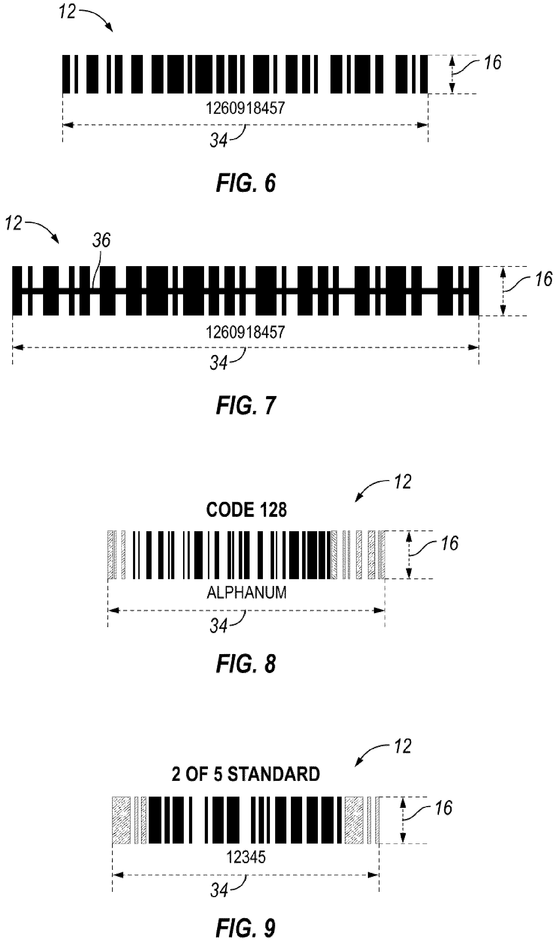

The code 12 that is used can be either a barcode 12 or a two-dimensional code 12. When provided as a barcode 12, the barcode 12 can be one of many different types of barcodes 12. Fig. 6 is a front view of a barcode 12 in accordance with one exemplary embodiment and can be a standard barcode known in the industry that includes data that is embodied in a visual, machine-readable form. The barcode 12 has lines that are parallel to one another and vary in widths, spacing and sizes and are sometimes referred to as linear or one-dimensional codes. The barcode 12 may thus be a one-dimensional object code and not a two-dimensional object code. Information that is read from the barcode 12 is read in a linear manner from one side to the other and is not read in two linear manners that are perpendicular to one another. The barcode 12 has a circumferential length 34 that is longer than a length 16 that is oriented in the radial direction 46. However, in other embodiments the length 16 could be longer than the circumferential length 34. The length 34 is referred to as the circumferential length 34 because it extends longer in the circumferential direction 48 than in the radial direction 46. The barcode 12 may be oriented on the tire 10 in any manner such that the bars of the barcode 12 extend generally in the radial direction 46, generally in the circumferential direction 48, or generally at a non-zero angle to both the radial and circumferential directions 46, 48. Although described in previous embodiments as using the length 16 to calibrate distances captured in the visual data, the method may instead use a known circumferential length 34 and the measured circumferential length 34 to calibrate other measured visual data.

Fig. 7 shows the barcode 12 that may be associated with the method as described with respect to the Fig. 3 embodiment. The barcode 12 includes the position line 36 that is oriented at a 90 degree angle to the bars of the barcode 12 and that extends along the entire circumferential length 34. The position line 36 is located halfway along the length 16 so that it is at the midpoint of the height of the barcode 12 in the length 16 direction. In other versions, the position line 36 need not be at one half of the height of the barcode 12 in the length 16 direction, and in other embodiments the position line 36 need not extend along the entire circumferential length 34 but could instead extend along less than the entire circumferential length 34. The position line 36 is an element of the barcode 12 that is not machine readable to obtain coded information from the barcode 12, but is instead an element of the barcode 12 used to know where the barcode 12 is located relative to another portion of the tire 10 such as a central axis 24 or worn tread surface 14.

Fig. 8 is another possible embodiment of the barcode 12 that lacks the position line 36, and is known as a Code 128 barcode that is a high-density linear barcode symbology defined in IS/IEC 15417:2007. This barcode 12 is used for alphanumeric or numeric only applications and can encode all 128 characters of ASCII. This barcode 12 generally results in more compact size compared to other barcodes such as Code 39. The barcode 12 can likewise be provided as that shown in Fig. 9 in which the barcode 12 is known as a 2 of 5 standard, sometimes referred to as an interleaved 2 of 5 (ITF). This barcode 12 is a continuous two-width barcode symbology that encodes digits. The encoding method of the 2 of 5 standard barcode 12 encodes pairs of digits in which the first digit is encoded in the five bars, and the second digit is encoded in the five spaces interleaved within them. Two out of every five bars are wide.

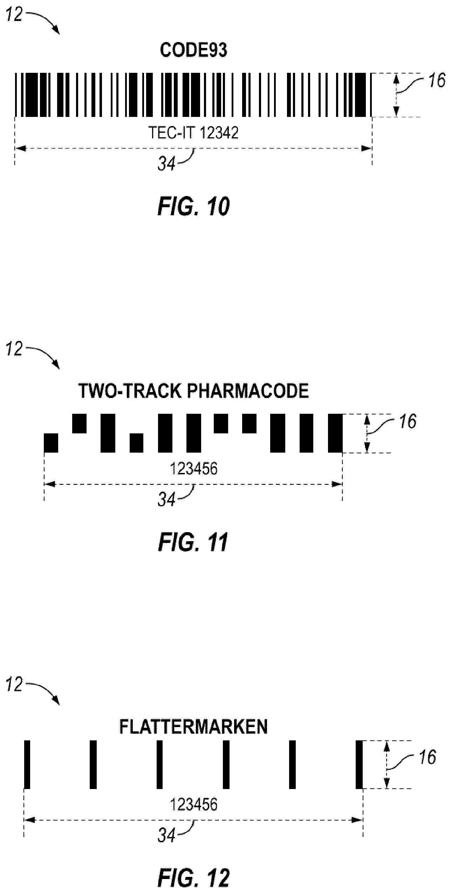

Another barcode 12 that can be used in the present method is shown in Fig. 10 and is known as a Code 93 barcode. The Code 93 barcode has nine modules wide, and has three bars and three spaces. Each bar and space is from one to four modules wide. The Code 93 barcode 12 is designed to encode 26 upper case letters, 10 numerical digits, 7 special characters, and 5 special characters that can be combined with other characters to unambiguously represent all 128 ASCII characters. Fig. 11 shows another possible linear or one-dimensional barcode 12 that can be used in the present method and is known as a two-track pharmacode. The two-track pharmacode is designed to be read by a barcode reader despite printing errors that may occur. This two-track pharmacode barcode 12 uses vertical positioning of half bars together with full bars to encode its data and is designed to be read from right to left.

Fig. 12 shows a barcode 12 that is a flattermarken barcode 12 that is another type of barcode 12 that can be used with the present method. This particular barcode 12 encodes only numerical information and has a character set that is from 0-9. In use, each type of tire could be assigned a numerical number, and the barcode 12 can be read to reveal a number that is then cross-referenced with the database to identify the tire 10 type and other known information such as lengths 26, 30, 18, 20. The barcodes 12 can be any type of linear barcode that can be read by a cell phone 40 or other machine reader to ascertain either just the type of tire 10 that the barcode 12 is located on, or can include additional or alternative information such as the lengths 18, 20, 26 and/or 30. In some embodiments the tire 10 type is not identified in the barcode 12, but the barcode 12 contains information in it such as the lengths 18, 20, 26 and/or 30 to determine the wear rate and whether the tire 10 needs to be replaced.

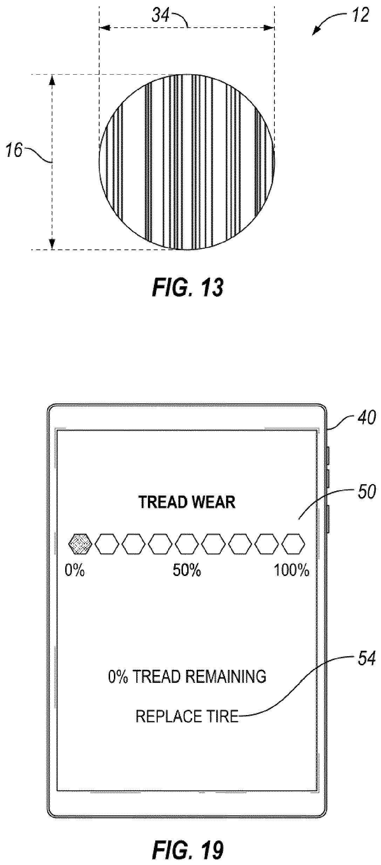

Although described as being rectangular in shape, the barcode 12 need not be rectangular in other embodiments. Fig. 13 shows another embodiment of the barcode 12 in which the barcode 12 is circular in shape instead of being rectangular. In this embodiment, the barcode 12 has a length 16 that is the same distance as the circumferential length 34. The barcode 12 thus has a single diameter that can be read by the cell phone 40 or other device for calibration purposes to ascertain the length 20. The bars of the barcode 12 can have different heights, or distances in the length 16 direction, and need not all be of the same height. The barcode 12 can have other shapes such as being configured in a triangle, a hexagon, a pentagon, or otherwise.

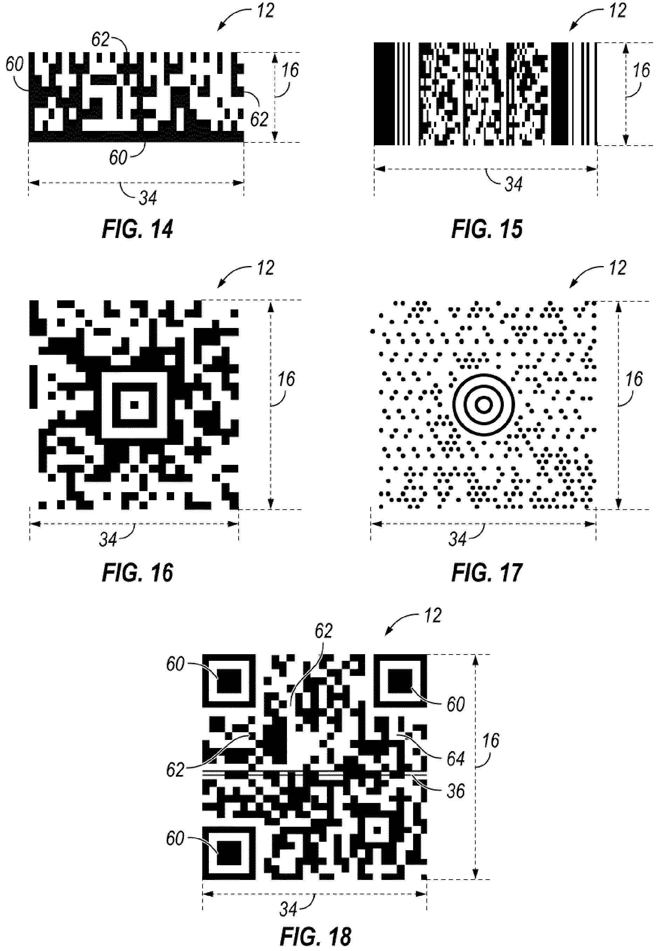

The various barcodes 12 can be read by a machine in a linear fashion. Some of the barcodes 12 can only be read in a single direction and cannot be read by a machine in more than one direction. Two-dimensional codes 12 can be read by a machine in two different dimensions and need not be limited to a single dimension of reading. Various type of two-dimensional codes 12 can be employed in the present method to ascertain the wear on the tires 10. Fig. 14 is a front view of a two-dimensional code 12 in accordance with one exemplary embodiment and can be a standard two-dimensional code known in the industry that includes data that is embodied in a visual, machine-readable form. The two-dimensional code 12 has black and white cells arranged in a rectangular pattern, and the encoded data can be text or numeric data. The two-dimensional code 12 is distinguished from a one-dimensional bar code which has information arranged and read in a linear manner from one side to the other and is not read in two linear manners that are perpendicular to one another. The two-dimensional code 12 has a circumferential length 34 that is longer than a length 16 that is oriented in the radial direction 46. However, in other embodiments the length 16 could be longer than the circumferential length 34. The length 34 is referred to as the circumferential length 34 because it extends longer in the circumferential direction 48 than in the radial direction 46. The two-dimensional code 12 may be oriented on the tire 10 in any manner such that the cells of the two-dimensional code 12 extend generally in the radial direction 46, generally in the circumferential direction 48, or generally at a non-zero angle to both the radial and circumferential directions 46, 48. Although described in previous embodiments as using the length 16 to calibrate distances captured in the visual data, the method may instead use a known circumferential length 34 and the measured circumferential length 34 to calibrate other measured visual data.

The two-dimensional code 12 shown in Fig. 14 is a type known as a data matrix. Depending upon the particular coding used, a light cell could represent a 0 and a dark cell could represent a 1. The data matrix 12 has a finder pattern 60 that is two solid adjacent boarders that make up an L shape. The finder pattern 60 is used to locate and orient the symbol. The data matrix 12 also includes a timing pattern 62 which are located along the opposite two edges and are alternating cells of light and dark colors. The timing pattern 62 provides a count of the number of rows and columns in the data matrix 12. Within these boarders 60 and 62, there are rows and columns of cells that encode information.

Fig. 15 is another exemplary embodiment of the two-dimensional code 12 that is known as a PDF417 code. A PDF417 code is a stacked linear barcode that has codewords that represent a number from 0 to 928. From left to right in the circumferential length 34, the PDF417 code has a quiet zone, a start pattern that identifies the two-dimensional code 12 as a PDF417, a row left codeword that contains information about the row, and from 1-30 codewords that represent numbers, letters, or symbols. Moving to the right from the codewords a row right is present that includes more information about the row, a stop pattern, and then another quiet zone. Of the 928 available codewords, 900 can be used for data, and 29 can be used for functions. Information about the tire 10 can be stored in the codewords.

Fig. 16 is another example of how the two-dimensional code 12 can be configured. Here, the two-dimensional code 12 is arranged as an Aztec code and is square shaped in that the circumferential length 34 is the same as the radial length 16. The Aztec code does not have a quiet zone around its boarders. The Aztec code is configured with a bulls-eye in its center that is used for locating the code. Data on the tire 10 is encoded in concentric square rings that surround this central bulls-eye. The corners include orientation marks that allow the data to be read if rotated or reflected. Eight bit values can be encoded with Aztec code, and two escape codes can likewise be present within this particular type of code 12.

A two-dimensional code 12 that can be used in the method is of a type known as a maxicode in Fig. 17. The maxicode is square in shape with the lengths 16 and 34 equal to one another. The maxicode is identified by a bulls-eye in the middle surrounded by a pattern of hexagonal dots. This type of two-dimensional bar code 12 can store up to 93 characters of information. The circular bulls-eye is symmetrical and useful in automatic symbol location regardless of the orientation of the two-dimensional code 12.

Fig. 18 shows the two-dimensional code 12 that may be associated with the method as described with respect to the Fig. 3 barcode 12 embodiment. The two-dimensional code 12 includes the position line 36 that is oriented at a 90 degree angle and halfway between two of the finder pattern 60 blocks, and the position line 36 extends in the circumferential direction 34 and is perpendicular to the length 16. The position line 36 is located halfway along the length 16 so that it is at the midpoint of the height of the two-dimensional code 12 in the length 16 direction. In other versions, the position line 36 need not be at one half of the height of the two-dimensional code 12 in the length 16 direction, and in other embodiments the position line 36 need not extend along the entire circumferential length 34 but could instead extend along less than the entire circumferential length 34. The position line 36 is an element of the two-dimensional code 12 that is not machine readable to obtain coded information from the two-dimensional code 12, but is instead an element of the two-dimensional code 12 used to know where the two-dimensional code 12 is located relative to another portion of the tire 10 such as a central axis 24 or worn tread surface 14.

The two-dimensional code 12 shown in Fig. 18 is a QR code. The QR code has a quiet zone around its outside, and a finder pattern 60 that is made up of three squares located in the corners of the QR code. Typically, the bottom right corner does not have a square making up part of the finder pattern 60. The finder pattern 60 includes a black square surrounded by a white module that is surrounded by a black module. The finder pattern 60 allows the decoder software to recognize the QR code and determine its correct orientation. A timing pattern 62 is also present within the QR code and can be alternating black and white modules that enable the decoder software to determine the width of a single module. The QR code includes a data area 64 into which data on the tire 10 can be stored and read by the system. The QR code shown in Fig. 18 has the position line 36, but it need not be present in other embodiments. The method can locate the length 18 of the position of the two-dimensional code by measuring to the top of the two black modules of the top two finder patterns 60, or by measuring to the bottom of the black module of the bottom finder pattern 60.

Although described as being rectangular or square in shape, the two-dimensional code 12 need not be rectangular or square in other embodiments. The two-dimensional code 12 can be circular in shape. In this embodiment, the two-dimensional code 12 has a length 16 that is the same distance as the circumferential length 34. The two-dimensional code 12 thus has a single diameter that can be read by the cell phone 40 or other device for calibration purposes to ascertain the length 20. The dots, bars or modules of the two-dimensional code 12 can have different heights, or distances in the length 16 direction, and need not all be of the same height. The two-dimensional code 12 can have other shapes such as being configured in a triangle, a hexagon, a pentagon, or otherwise.

The output from the processing can be provided to the user on the display 50 of a cell phone 40 to inform the user whether the tire 10 has tread worn down to replacement level. The display 50 can include various types of information. As shown in Fig. 19, one embodiment of the display 50 may show a graph of percentages of tread wear with cells that are filled up based upon the amount of tread wear remaining after the calculations. The graph can be color coded and can have various configurations. The display 50 may also display a message 54 that tells the user of the percentage of tread remaining and whether the tire should or should not be replaced. The message 54 can be variously configured to inform the user of the results of the tread wear determination for knowledge of the state of the tire 10.

One example of the method can be shown with reference to Fig. 2 in which the device used in the execution of the method is a cell phone 40 that has a cell phone camera 38 that directs the view 56 onto the sidewall 32 such that the cell phone 40 is oriented in a parallel manner to the sidewall 32. The code 12 is captured in the image 52 and the processor of the cell phone 40 or in the cloud may read the encoded message on the barcode 12 to know the type of tire 10. The code 12 here is a barcode 12, but the present example applies as well should the code 12 in Fig. 2 be a two-dimensional code 12. The barcode 12 then identifies known dimensions of the tire 10 and physical properties of the barcode 12. In this example, the barcode 12 identifies the particular type of tire 10 which can be looked up in a database in the cell phone 40 or cloud upon being read by the cell phone 40. Particular physical properties of the tire 10 are then known by the method, and these physical properties are set forth in Table 1 below.

**Table 1**

| TIRE SIZE | ACTUAL TIRE DIMENSIONS | | | | |
|---|---|---|---|---|---|
| | Overall Diameter (mm) | Overall Width (mm) | Rolling Circumference (mm) | Static Loaded Radius (mm) | Replacement Overall Diameter (mm) |
| 21X7X15 | 533 | 178 | 1675 | 255 | 487 |

The physical properties that the method may use are the new tire outer diameter 26 which is 533 mm and the replacement tire outer diameter 30 which is 487 mm. Other physical properties in Table 1 need not be used in the method. The method may additionally or alternatively use the data shown below in Table 2 in that once the processor identifies the tire 10 from the barcode 12 the processor may consult a lookup table to know that the new tire outer diameter 26 is 533 mm, the replacement tire outer diameter 30 is 487 mm, the barcode 12 length 16 is 15 mm, and the length 18 of the position of the barcode 12 is 467 mm. In some embodiments, the radii could be looked up or even calculated instead of the diameters, or both the radii and diameters could be looked up and/or calculated in the method. The processor and lookup table may be located on the device 40 and/or the cloud.

**Table 2**

| | | |
|---|---|---|
| New Tire Outer Diameter | 533 mm (Diameter) | New radius 266.5 mm; Known in Database |
| Replacement Outer Diameter | 487 mm (Diameter) | Replacement radius 243.5 mm; Known in Database |
| Barcode Length | 15 mm | Known in Database |
| Length of Position of Barcode | 467 mm (Diameter) | Position radius 233.5 mm; Known in Database |
| Length of Worn Tread Surface to Barcode | 21.5 mm | Determined by method via measurement |
| Worn Tire Outer Diameter | 510 mm | Calculated |
| Tire Wear Percentage | 50% | Calculated |
| Wearable Tread | 23 mm | Known in Database |
| Tread Remaining | 11.5 mm | Calculated |

The processor can calculate the worn tire outer diameter 28 by taking the visual data obtained from the view 56 to determine the length 20 from the worn tread surface 14 to the barcode 12 which in this case is measured at the most radially outward position 44. The method will determine this length 20 through knowing the size of the barcode length 16 that is 15 mm, for instance by knowing the amount of pixels in the barcode length 16 and then comparing the amount of pixels within the length 20. This length 20 is determined to be 21.5 mm. Once the length 20 is determined this length can be added to the length 18 and then multiplied by two to reach the worn tire outer diameter 28. The length 28 can be calculated as (21.5 mm + 233.5 mm) X 2 = 510 mm. Another way to calculate the worn tire outer diameter 28 would be to add the diameter of the position of the length of the barcode 18 which is 467 mm to two times the length 20 which is 21.5 mm. The alternative way to calculate the worn tire outer diameter 28 is thus 467 mm + (2 X 21.5 mm) = 467 mm + 43 mm = 510 mm. As such, there are various ways to calculate the worn tire outer diameter 28 from the known and measured data.

At this point, the tire wear percentage can be calculated as ((new tire outer diameter 26 - worn tire outer diameter 28) / (new tire outer diameter 26 - replacement tire outer diameter 30) X 100. Using the data from Table 2 causes the tire wear percentage to be calculated as ((533 mm - 510 mm) / (533 mm - 487 mm) X 100 = (23 mm / 46 mm) X 100 = 50%. Although diameters regarding the worn, new, and replacement lengths are used in the calculation, radii may be used to make the tire wear percentage calculation in other embodiments. This tire wear percentage can be provided to the user in the message 54 or otherwise presented on the display 50. This wear percentage can be converted to a tire remaining percentage simply by taking 100% - tire wear percentage = 100% - 50% = 50%. The method can provide a warning message 54 to the user once the tread remaining percentage drops to a certain level, such as 10% or 15%, to inform the user that the tire 10 is getting close to needing replacement or retreading.

Additional or alternative messages 54 can be provided to the user by the method. Upon calculating the worn tire outer diameter 30, the method may simply compare the replacement tire outer diameter 30 to the worn tire outer diameter 28 and then display the appropriate message. For example if from Table 2 the worn tire outer diameter 28 is 510 mm and is greater than the replacement tire outer diameter 30 which is 487 mm, then a sufficient tread level message 54 can be communicated to the user. Further, or alternatively, the remaining tread on the tire 10 can be communicated to the user in the message 54. The remaining tread can be calculated by taking the worn tire outer diameter 28 - the replacement tire outer diameter 30 and then dividing by two. Using the Table 2 data, the remaining tread = (510 mm - 487 mm) / 2 = 23 mm / 2 = 11.5 mm. It is to be understood that various ways of calculating the aforementioned properties of the tire 10 are possible and that those disclosed are only exemplary.

Measured data combined with date and location information provided by the device and software may be processed under the form of tire 10 wear speed in time for specific locations and used for prediction of tire 10 wear in the future. For example, multiple measurements may be taken at certain time intervals to create a curve that projects into the future the estimation of time when the tire 10 will be worn to the replacement tire outer diameter 30. Measurements to obtain data points and projecting this information onto a graph over time not only provides insight onto the current wear status of the tire 10, but further allows one to better predict the date when the tire 10 will reach its end of life.

When the code 12 is configured as a barcode 12, the barcode 12 can be machine readable only in a linear direction, and cannot be readable in a two-dimensional direction. However, the calibration for the objects in the image 52 can be made using either one dimensional or two-dimensional measurements of known and observed lengths of the barcode 12. When the code 12 is a two-dimensional code 12, it can be machine readable in two different directions. Again, the calibration for the objects in the image 52 can be made using either one or two-dimensional measurements of known and observed lengths of the two-dimensional code 12. The method can be organized so that every individual tire 10 is individually identified by the barcode 12 or two-dimensional code 12, or can be organized so that the barcode/two-dimensional code 12 identifies physical dimensions of the tire 10 but does not distinguish between the tire 10 and another tire 10 that shares the same physical dimensions and thus does not uniquely identify the tire 10.

Although described as using a known length 16 in the radial direction to calibrate the method into determining the length 20 upon capturing the image 52, this need not be done in other embodiments. For example, the circumferential length 34 could be known by the system and then measured in the captured image 52 to in turn calibrate the method to know the measured length 20 in the radial direction 46. Any known dimension or combination of known dimensions of the code 12 can be used for calibration purposes to establish the length 20. A known length that runs in both the circumferential direction 48 and radial direction 46 of the code 12 can be used for calibration purposes in other embodiments. The code 12 thus provides information content to the method, and provides the method with a size and known positioning on the tire 10 to effect the measurement in the method. The code 12 content can provide information about the type of tire 10 that will be used by the application to process measurement data and compare it to the known tire 10 specifications. The size of the code 12 either the length 16, circumferential length 34, combinations thereof or otherwise provides a calibrated reference like a gauge for the camera measuring algorithm and the code 12 positioning on the tire 10 provides to the measurement the system of reference.

The method disclosed herein can be used to measure tread wear on solid industrial tires 10 or on pneumatic industrial tires 10. Further, the presently disclosed method can be used to measure passenger car and light truck tires 10, and can be utilized with heavy truck tires 10, with tires on two wheel vehicles, or any other type of tire that would need to have its tread wear monitored. Aside from having information that can be read from the barcode 12, the barcode 12 has a known position on the tire 10 and a known dimension in order to allow the method to determine wear of the tread of the tire 10. Use of the method to measure the wear on a heavy truck tire 10 is shown with reference to Fig. 1. Use of the method to measure wear on a solid tire, that could be a construction tire 10, is shown in Fig. 2. The construction tire 10 could be used on fork trucks, cranes, bull dozers, skid steers, or various types of construction equipment. The method may also be used on pneumatic tires 10 that are utilized in the construction industry.

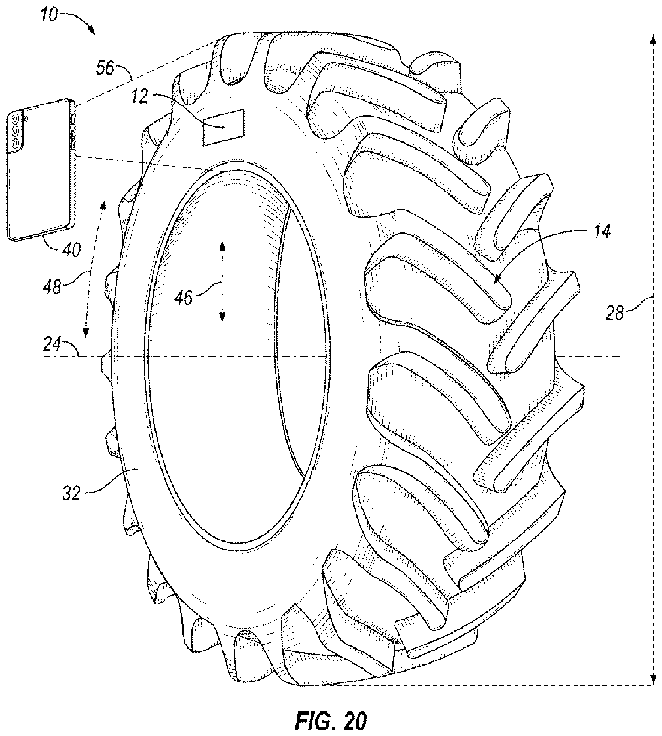

Additional applications of the method may be on agricultural tires 10, an example of which is shown with reference to Fig. 20. Here, the code 12 is a two-dimensional code 12 and is located on a sidewall 32 of the agricultural tire 10. The agricultural tire 10 can be used on agricultural vehicles such as tractors, combines, utility terrain vehicles, balers, seeders, spreaders, sprayers, and shakers. These agricultural tires 10 are pneumatic, but can be non-pneumatic and may be solid tires 10 in some applications. When measuring the worn tire outer diameter 28, the agricultural tires 10 are measured from the outer surfaces of the tread bars that are present on the tread of the agricultural tires 10, and the method measures the wear of these tread bars as they wear towards the central axis 24 in the radial direction 46.

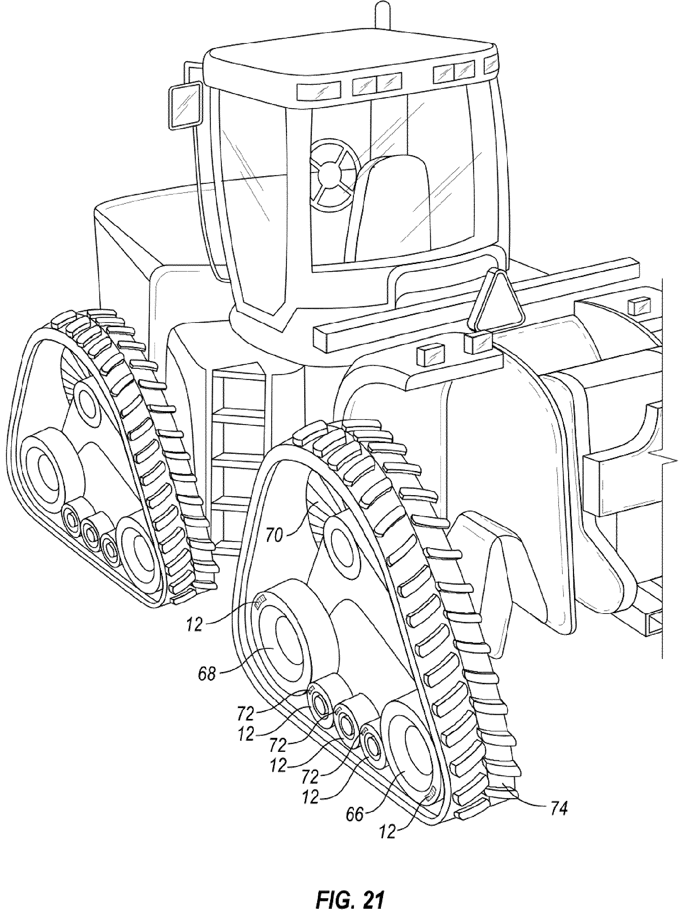

The method can also be used on wheels of track systems that are found on agricultural vehicles, snowmobiles, military vehicles, and any other track vehicle. Four track systems on a tractor is shown in Fig. 21, and the method can be used on the wheels of these track systems. Each track system includes an endless track 74 that rotates around a plurality of wheels, and a tension device may be used to create a desired amount of tension on the track 74. A drive wheel 70 engages lugs of the track 74, and rotation of the drive wheel 70 causes movement of the track 74. The drive wheel 70 is generally made of metal and there is normally no need to measure any wear on the drive wheel 70. However, the front and rear idler wheels 66 and 68 may have rubber surfaces that engage the inside of the track 74 and it may be desirable to measure the wear of the rubber surfaces of the idler wheels 66, 68. In this regard, a code 12 can be located on the sidewalls of the front idler wheel 66 and the rear idler wheel 68 and the method can utilize the codes 12 on the idler wheels 66, 68 to determine wear of these wheels 66, 68. The track system also includes three mid rollers 72 that can have rubber outer surfaces that engage the interior of the track 74. Each one of these mid rollers 72 may have a code 12 located on their sidewall or other portion which can be used to determine wear of the rubber of the mid rollers 72.

While the present subject matter has been described in detail with respect to specific embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be apparent. The scope of the invention is defined by the claims.

## Claims

1. A method of measuring a tire, comprising:
providing a tire that has a code (12) on the tire (10), wherein the tire has a worn tread surface (14);
obtaining visual data from the tire and the code;
determining from the visual data a length (16) of the code and a length of a position (18) of the code;
determining a length (20) from the code to the worn tread surface from the visual data using the length of the code;
calculating wear of the tire by using the length (20) from the code to the worn tread surface.

2. The method as set forth in claim 1, wherein the code is a barcode.

3. The method as set forth in claim 1, wherein the code is a two-dimensional code.

4. The method as set forth in any one of claims 1-3, wherein the calculating wear comprising:
calculating a worn tire outer diameter by adding the worn tread surface to code length to the length of the position of the code and then multiplying this number by 2; and
wherein the calculating wear of the tire is a tire wear rate that is calculated by the following equation: $the tire wear rate = \left(\frac{\left(a new tire outer diameter-the worn tire outer diameter\right)}{\left(the new tire outer diameter-a replacement tire outer diameter\right)}\right) .$

5. The method as set forth in claims 1-4, wherein the visual data obtained from the code causes determining of the length of the code and the length of the position of the code by lookup from a database.

6. The method as set forth in any one of claims 1-5, wherein the visual data obtained from the code causes determining of the new tire outer diameter and the replacement tire outer diameter by lookup from a database.

7. The method as set forth in any one of claims 1-6, wherein the code is located on a sidewall of the tire.

8. The method as set forth in any one of claims 1-7, wherein the code has a rectangular shape.

9. The method as set forth in any one of claims 1-7, wherein the code has a non-square shape.

10. The method as set forth in claim 2, wherein the code has a position line that is oriented perpendicular to lines of the code, wherein the position line is used in determining from the visual data the length of the position of the code.

11. The method as set forth in any one of claims 1-7, wherein the code has a square shape.

12. The method as set forth in any one of claims 1-11, wherein the length of the code determined from the visual data is a radial length of the code.

13. The method as set forth in claim 3, wherein the code is a data matrix, wherein the data matrix has a finder pattern along two edges of the data matrix, and wherein the data matrix has a timing pattern along two edges of the data matrix that do not include the finder pattern.

14. The method as set forth in claim 3, wherein the code is a QR code, wherein the QR code has three squares that make up a finder pattern, wherein the QR code has a data area.

15. The method as set forth in any one of claims 1-14, wherein the obtaining visual data from the tire and the code is from use of a visual data capture device that is a cell phone camera.

16. The method as set forth in any one of claims 1-9, wherein the length of the position of the code is measured from a central axis of the tire to a most radially outward position of the code.

17. The method as set forth in any one of claims 1-3, wherein the calculating wear comprising:
calculating a worn tire outer diameter by adding the worn tread surface to code length to the length of the position of the code and then multiplying this number by 2; and
comparing the worn tire outer diameter to a replacement tire outer diameter.

## Patentansprüche

1. Verfahren zur Messung eines Reifens, das Folgendes umfasst:
Bereitstellen eines Reifens, der einen Code (12) auf dem Reifen (10) aufweist, wobei der Reifen eine verschlissene Lauffläche (14) aufweist;
Erhalten visueller Daten von dem Reifen und dem Code; Bestimmen aus den visuellen Daten einer Länge (16) des Codes und einer Länge einer Position (18) des Codes;
Bestimmen einer Länge (20) von dem Code bis zu der verschlissenen Laufflächenoberfläche aus den visuellen Daten unter Verwendung der Länge des Codes;
Berechnen des Verschleißes des Reifens unter Verwendung der Länge (20) von dem Code bis zu der abgenutzten Laufflächenoberfläche.

2. Verfahren nach Anspruch 1, wobei der Code ein Strichcode ist.

3. Verfahren nach Anspruch 1, wobei der Code ein zweidimensionaler Code ist.

4. Verfahren nach einem der Ansprüche 1-3, wobei das Berechnen des Verschleißes Folgendes umfasst:
Berechnen eines Außendurchmessers des verschlissenen Reifens durch Hinzufügen der verschlissenen Laufflächenoberfläche bis zu der Codelänge der Position des Codes und dann Multiplizieren davon mit 2; und
wobei das Berechnen des Verschleißes des Reifens eine Reifenverschleißrate ist, die durch die folgende Gleichung berechnet wird: $\begin{matrix}Reifenverschleißrate = \\ \left(\frac{\left(Außendurchmesser des neuen Reifens-Anßendurchmesser des verschlissenen Reifens\right)}{\left(Außendurchmesser des neuen Reifens-Anßendurchmesser des Ersatzreifens\right)}\right)\end{matrix}$

5. Verfahren nach den Ansprüchen 1-4, wobei die visuellen Daten, die aus dem Code erhalten werden, das Bestimmen der Länge des Codes und der Länge der Position des Codes durch Nachschlagen in einer Datenbank bewirken.

6. Verfahren nach den Ansprüchen 1-5, wobei die visuellen Daten, die aus dem Code erhalten werden, das Bestimmen des Außendurchmessers des neuen Reifens und des Außendurchmessers des Ersatzreifens durch Nachschlagen in einer Datenbank bewirken.

7. Verfahren nach einem der Ansprüche 1-6, wobei sich der Code auf einer Seitenwand des Reifens befindet.

8. Verfahren nach einem der Ansprüche 1-7, wobei der Code eine Rechteckform aufweist.

9. Verfahren nach einem der Ansprüche 1-7, wobei der Code eine nicht quadratische Form aufweist.

10. Verfahren nach Anspruch 2, wobei der Code eine Positionslinie aufweist, die senkrecht zu Linien des Codes ausgerichtet ist, wobei die Positionslinie beim Bestimmen, aus den visuellen Daten, der Länge der Position des Codes verwendet wird.

11. Verfahren nach einem der Ansprüche 1-7, wobei der Code eine Quadratform aufweist.

12. Verfahren nach einem der Ansprüche 1-11, wobei die Länge des Codes, die aus den visuellen Daten bestimmt wird, eine radiale Länge des Codes ist.

13. Verfahren nach Anspruch 3, wobei der Code eine Datenmatrix ist, wobei die Datenmatrix ein Suchmuster entlang zweier Kanten der Datenmatrix aufweist, und wobei die Datenmatrix ein Zeitfolgemuster entlang zweier Kanten der Datenmatrix aufweist, die das Suchmuster nicht beinhalten.

14. Verfahren nach Anspruch 3, wobei der Code ein QR-Code ist, wobei der QR-Code drei Quadrate aufweist, die ein Suchmuster bilden, wobei der QR-Code eine Datenfläche aufweist.

15. Verfahren nach einem der Ansprüche 1 bis 14, wobei das Erhalten visueller Daten von dem Reifen und dem Code auf der Verwendung einer Aufnahmevorrichtung für visuelle Daten beruht, die eine Mobiltelefonkamera ist.

16. Verfahren nach einem der Ansprüche 1-9, wobei die Länge der Position des Codes von einer Mittenachse des Reifens zu einer am weitesten radial außen liegenden Position des Codes gemessen wird.

17. Verfahren nach einem der Ansprüche 1-3, wobei das Berechnen des Verschleißes Folgendes umfasst:
Berechnen eines Außendurchmessers des verschlissenen Reifens durch Hinzufügen der verschlissenen Laufflächenoberfläche bis zu der Codelänge der Position des Codes und dann Multiplizieren davon mit 2; und
Vergleichen des Außendurchmessers des verschlissenen Reifens mit dem Außendurchmesser eines Ersatzreifens.

## Revendications

1. Procédé de mesure d'un pneu, comprenant :
la fourniture d'un pneu qui présente un code (12) sur le pneu (10), dans lequel le pneu présente une surface de bande de roulement usée (14) ;
l'obtention de données visuelles à partir du pneu et du code ;
la détermination à partir des données visuelles d'une longueur (16) du code et d'une longueur d'une position (18) du code ;
la détermination d'une longueur (20) du code à la surface de bande de roulement usée à partir des données visuelles en utilisant la longueur du code ;
le calcul de l'usure du pneu en utilisant la longueur (20) du code à la surface de bande de roulement usée.

2. Procédé selon la revendication 1, dans lequel le code est un code-barres.

3. Procédé selon la revendication 1, dans lequel le code est un code bidimensionnel.

4. Procédé selon l'une quelconque des revendications 1 à 3, dans lequel le calcul de l'usure comprend :
le calcul d'un diamètre extérieur de pneu usé en ajoutant la surface de bande de roulement usée à la longueur de code à la longueur de la position du code, puis en multipliant ce nombre par 2 ; et
dans lequel le calcul de l'usure du pneu est un taux d'usure du pneu qui est calculé par l'équation suivante : $\begin{matrix}le taux d ′ usure du pneu = \\ \left(\frac{\left(le diamètre extérieur d′un pneu neuf-le diamètre extérieur du pneu usé\right)}{\left(le diamètre extérieur du pneu neuf-le diamètre extérieur d′un pneu de remplacement\right)}\right) .\end{matrix}$

5. Procédé selon les revendications 1 à 4, dans lequel les données visuelles obtenues à partir du code entraînent la détermination de la longueur du code et de la longueur de la position du code par recherche dans une base de données.

6. Procédé selon l'une quelconque des revendications 1 à 5, dans lequel les données visuelles obtenues à partir du code entraînent la détermination du diamètre extérieur du nouveau pneu et du diamètre extérieur du pneu de remplacement par recherche dans une base de données.

7. Procédé selon l'une quelconque des revendications 1 à 6, dans lequel le code est situé sur un flanc du pneu.

8. Procédé selon l'une quelconque des revendications 1 à 7, dans lequel le code présente une forme rectangulaire.

9. Procédé selon l'une quelconque des revendications 1 à 7, dans lequel le code présente une forme non carrée.

10. Procédé selon la revendication 2, dans lequel le code présente une ligne de position qui est orientée perpendiculairement à des lignes du code, dans lequel la ligne de position est utilisée pour déterminer à partir des données visuelles la longueur de la position du code.

11. Procédé selon l'une quelconque des revendications 1 à 7, dans lequel le corps présente une forme carrée.

12. Procédé selon l'une quelconque des revendications 1 à 11, dans lequel la longueur du code déterminée à partir des données visuelles est une longueur radiale du code.

13. Procédé selon la revendication 3, dans lequel le code est une matrice de données, dans lequel la matrice de données présente un motif de recherche le long de deux bords de la matrice de données, et dans lequel la matrice de données présente un motif de synchronisation le long de deux bords de la matrice de données qui n'incluent pas le motif de recherche.

14. Procédé selon la revendication 3, dans lequel le code est un code QR, dans lequel le code QR présente trois carrés qui constituent un modèle de recherche, dans lequel le code QR présente une zone de données.

15. Procédé selon l'une quelconque des revendications 1 à 14, dans lequel l'obtention de données visuelles à partir du pneu et du code provient de l'utilisation d'un dispositif de capture de données visuelles qui est un appareil photo de téléphone portable.

16. Procédé selon l'une quelconque des revendications 1 à 9, dans lequel la longueur de la position du code est mesurée à partir d'un axe central du pneu jusqu'à une position la plus radialement vers l'extérieur du code.

17. Procédé selon l'une quelconque des revendications 1 à 3, dans lequel le calcul de l'usure comprend :
le calcul d'un diamètre extérieur de pneu usé en ajoutant la surface de bande de roulement usée à la longueur de code à la longueur de la position du code, puis en multipliant ce nombre par 2 ; et
la comparaison du diamètre extérieur du pneu usé à un diamètre extérieur de pneu de remplacement.
